(19) Europäisches Patentamt
European Patent Office
Office européen des brevets

(11) **EP 2 932 847 B1**

(12) **EUROPEAN PATENT SPECIFICATION**

(45) Date of publication and mention of the grant of the patent:
**27.09.2017 Bulletin 2017/39**

(21) Application number: **15159659.0**

(22) Date of filing: **24.07.2009**

(51) Int Cl.:
*A01N 31/02* (2006.01)   *A01N 37/02* (2006.01)
*A01N 37/06* (2006.01)   *A01P 19/00* (2006.01)

(54) **ACETATE-CONTAINING MATING DISRUPTANT AND MATING DISRUPTION METHOD USING THE SAME**

ACETATHALTIGER PAARUNGSUNTERBRECHER UND PAARUNGSUNTERBRECHUNGSVERFAHREN DAMIT

AGENT DE DISSOCIATION D'ACCOUPLEMENT CONTENANT UN ACÉTATE ET PROCÉDÉ DE DISSOCIATION D'ACCOUPLEMENT UTILISANT CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.07.2008 JP 2008190700**

(43) Date of publication of application:
**21.10.2015 Bulletin 2015/43**

(62) Document number(s) of the earlier application(s) in accordance with Art. 76 EPC:
**09009617.3 / 2 191 717**

(73) Proprietor: **Shin-Etsu Chemical Co., Ltd.**
**Chiyoda-ku**
**Tokyo 100-0004 (JP)**

(72) Inventors:
• **Ogawa, Kinya**
**Tokyo, 100-0004 (JP)**
• **Hojo, Tatsuya**
**Niigata-ken (JP)**
• **Fukumoto, Takehiko**
**Niigata-ken (JP)**

(74) Representative: **Kutzenberger Wolff & Partner**
**Theodor-Heuss-Ring 23**
**50668 Köln (DE)**

(56) References cited:
• **W L ROELOFS ET AL: "Pheromones and Evolutionary Relationships of Tortricidae", ANNUAL REVIEW OF ECOLOGY AND SYSTEMATICS, vol. 13, no. 1, 1 November 1982 (1982-11-01), pages 395-422, XP055199835, ISSN: 0066-4162, DOI: 10.1146/annurev.es.13.110182.002143**
• **DATABASE WPI Week 198847 Thomson Scientific, London, GB; AN 1988-333816 XP002694099, & JP 63 246301 A (SHINETSU CHEM IND CO LTD) 13 October 1988 (1988-10-13)**

**Description**

BACKGROUND OF THE INVENTION

1. Field of the invention

The present invention relates to a so-called mating disruption method and a mating disruptant used therefor, wherein the former is a pest control method comprising a step of releasing a sex pheromone substance of a pest insect in a field to disrupt the mating behavior of the pest insect.

2. Description of the related art

Mating disruption for the control of a pest insect is carried out by releasing, in the air, an artificially synthesized sex pheromone of a pest inset to be controlled, suspending it in the air, disrupting the communication between males and females of that species for decreasing their mating rate, and thereby controlling the reproduction of the insect pest of next generation. Many of sex pheromones are aliphatic hydrocarbons having a functional group such as acetate, alcohol or aldehyde. An acetate type sex pheromone is particularly abundant among them.

Natural sex pheromone compositions comprising this acetate type pheromone component may comprise no alcohol, an extremely small amount of alcohol, or several percents or more of alcohol. For oriental tea tortrix moth (*Homona magnanima*), smaller tea tortrix moth (*Adoxophyes honmai*), summer fruit tortrix moth (*Adoxophyes orana fasciata*), common *cutworm*(*Spodoptera litura*), light brown apple moth (which may hereinafter be abbreviated as LBAM), grapevine moth (which may hereinafter be abbreviated as GVM) and the like, an alcohol generated by hydrolysis of an acetate, which is an inhibitor of attractant, has an attraction blocking effect. Accordingly, a high-purity natural pheromone composition having as small alcohol content as possible has been used as a mating disruptant in the mating disruption method even when it is used as a lure in a pheromone trap. It is very difficult to industrially remove the alcohol completely so that a natural pheromone composition has inevitably contained 0.1 to 0.5% by weight of alcohol as an impurity in practice.

Particularly in mating disruptants against tea and apple leaf rollers, only (Z)-11-tetradecenyl acetate (which may hereinafter be abbreviated as "Z11-TDA") which is a common component in the natural sex pheromones has been used conventionally. As the leaf rollers have acquired marked resistance against Z11-TDA, 8 to 30% by weight of (Z)-9-tetradecenyl acetate (which may hereinafter be abbreviated as "Z9-TDA")relative to an amount of Z11-TDA is added against smaller tea tortrix moth, while 2 to 30% by weight of (Z)-9-dodecenyl acetate (which may hereinafter be abbreviated as "Z9-DDA") relative to an amount of Z11-TDA is added as a countermeasure against it.

Examples of prior art documents include JP 62-212305A/1987 and JP 06-065007/1994.

Further, JP 63-246301A/1988 relates to a method for controlling Homona magnanima and Adoxophyes honmai by mating disruption (Examples 1-5). Homona magnanima and Adoxophyes honmai T are not target pest insects for the present invention. Therefore, because the mating disruption method is based on the species specificity, the present invention differs from JP 63-246301A/1988 drawn to different pest insects.

Still further, Roelofs and Brown, Ann. Rev. Ecol. Syst. 1982, 13:395-422 relates to pheromones and evolutionary relationships of tortricidae.

SUMMARY OF THE INVENTION

As a result of addition of 8 to 30% by weight of Z9-TDA relative to Z11-TDA, the mating disruptant has recovered its mating disruption effect for pest control. However, the effect is inconsistent. The study of the mating disruptant has revealed that there is a variation in the content of the alcohol ((Z)-9-tetradecenol, which may hereinafter be abbreviated as "Z9-TDOL") which is contained as an impurity of Z9-TDA, one of the effective components of the mating disruptant. The variation is from 0.1 to 0.5% by weight relative to an amount of Z9-TDA (from 0.02 to 0.12% by weight based on the total weight of the effective components). Because many of alcohols exhibit attraction inhibition effects, the content of alcohols is kept as low as 0.1 to 0.5% by weight relative to the content of corresponding acetates. Accordingly, it has been found that the mating disruption effect particularly in a high population density is reduced.

With a view toward overcoming the above problem, the present invention has been made. An object of the invention is to improve the mating disruption effect by adding, to a sex pheromone composition of a pest being substantially alcohol free and containing one or more acetates, all of the corresponding alcohol or alcohols obtainable by hydrolysis of the one or more acetates, or at least the corresponding alcohol obtainable by hydrolysis of the major acetate. It is sharp contrast with the conventional methods where the extremely restricted amount of the alcohol or alcohols is used.

The term "alcohol which can be derived from the acetate" as used herein means an alcohol obtainable by hydrolysis of the acetate and is the alcohol component of the ester derived from an acid and an alcohol.

In the conventional mating disruption method using a mating disruptant comprising mainly an acetate type sex pheromone such as Z11-TDA, it is said that decrease in the effect of the method is inevitable in a high population density because they may mate each other via means other than sex pheromone such as visual perception or contact. However, according to the invention, the pest control effect by the mating disruption becomes stable by specifying the content of the alcohol in the acetate type sex pheromone serving as an effective synergist.

In addition, when the content of the alcohol in the acetate type sex pheromone is adjusted to fall within a predetermined range in advance, even if a mating disruption method performed by using a mating disruptant shows an abnormal disruption ratio by traps, it is possible to start immediately to investigate the other causes of such an abnormal value by omitting a synergist effect of the alcohol. The other causes may include drop of the disruptant on the ground or shortage in the application amount. As a result, a measure for it can be taken quickly.

DETAILED DESCRIPTION OF THE PREFERRED EMBODIMENTS

The invention relates to a mating disruptant comprising 0.5 to 5.0% by weight, preferably 0.8 to 3.0% by weight of the derived alcohol relative to the amount of the deriving acetate which constitutes 50 to 100% by weight of the natural sex pheromone composition; a mating disruptant comprising 0.7 to 7.0% by weight, preferably 1.0 to 4.0% by weight of the derived alcohol relative to the amount of the deriving acetate which constitutes 30% by weight or greater but less than 50% by weight of the natural sex pheromone composition; a mating disruptant comprising 1.0 to 8.0% by weight, preferably 1.2 to 5.0% by weight of the derived relative to the amount of the deriving acetate which constitutes 10% by weight or greater but less than 30% by weight of the natural sex pheromone composition; or a mating disruptant comprising 1.5 to 10.0% by weight, preferably 1.5 to 6.0% by weight of the derived alcohol relative to the amount of the deriving acetate which constitutes less than 10% by weight of the natural sex pheromone composition; and a mating disruption method using the mating disruptant.

The term "substantially free of an alcohol" as used herein means not only that the mating disruptant contains no alcohol but also that it may contain an alcohol if the alcohol does not have an attraction activity. For example, when the acetate constitutes from 50 to 100% by weight of the natural sex pheromone composition, the derived alcohol is less than 0.5% by weight relative to the amount of the deriving acetate. When the acetate constitutes 30% by weight or greater but less than 50% by weight of the natural sex pheromone composition, the derived alcohol is less than 0.7% by weight relative to the amount of the deriving acetate. When the acetate constitutes 10% by weight or greater but less than 30% by weight of the natural sex pheromone composition, the derived alcohol is less than 1.0% by weight relative to the amount of the deriving acetate. When the acetate constitutes less than 10% by weight of the natural sex pheromone composition, the derived alcohol is less than 1.5% by weight of the natural sex pheromone composition relative to the amount of the deriving acetate.

The examples in which a mating disruptant comprises an alcohol as a component having no attraction activity, may include (i) a case where a mating disruptant comprises an alcohol which is a precursor of an acetate and the alcohol has remains without becoming the acetate when an acetate sex pheromone is biosynthesized in an insect body, and (ii) a case where a mating disruptant comprises the alcohol produced by hydrolysis of an acetate. Whether the alcohol comprised by the mating disruptant has an attraction activity or not can be determined by using, for example, electroantennogram (EAG) responses. In this measurement method, a minute electrode is inserted into a male antenna excised from a pest insect, and the resulting male antenna is brought into contact with air containing a specific component so that a feeble antenna potential generated from a component having an attraction activity is detected after amplification.

The term "a component having an attraction activity" as used herein means an effective component which a female of a pest insect has for attracting its male and it typically means some or all of the ingredients contained in a natural sex pheromone component.

The natural sex pheromone composition may contain various ingredients, depending on the kind of the pest insect to be controlled. The ingredients may include an ingredient having a high composition ratio, an ingredient having a low composition ratio, and an ingredient having a medium composition ratio. In general, the ingredient comprised in an amount of 50% by weight or greater may be considered as an ingredient of a high composition ratio, while the ingredient comprised in an amount of less than 10% by weight may be considered as an ingredient of a low composition ratio.

The mating disruptant has no particular limitation imposed on the kind or the number of pest insects to be controlled insofar as it can be used for the mating disruption method. In addition, there is no limitation on crops to which the mating disruptant is applied.

Based on a ratio in a natural sex pheromone composition and a ratio of each insect component in the mating disruptant for controlling one or more kinds of pest insects, the acetate content in the total natural sex pheromone composition is classified into four groups: from 50 to 100% by weight, 30% by weight or greater but less than 50% by weight, 10% by weight or greater but less than 30% by weight, and less than 10% by weight.

When the deriving acetate constitutes 50 to 100% by weight in the total natural sex pheromone composition, a mating disruption method using a mating disruptant comprising 0.5 to 5.0% by weight, preferably 0.8 to 3.0% by weight of the derived alcohol relative to the deriving acetate can bring a good control effect, while a disruption ratio by traps is good or may decrease slightly. When the deriving acetate constitutes 30% by weight or greater but less than 50% by weight in the total natural sex pheromone composition, use of a mating disruptant comprising 0.7 to 7.0% by weight, preferably 1.0 to 4.0% by weight of the derived alcohol relative to the deriving acetate can bring the confirmable effect. When the deriving acetate constitutes 10% by weight or greater but less than 30% by weight in the total natural sex pheromone composition, use of a mating disruptant comprising 1.0 to 8.0% by weight, preferably 1.2 to 5.0% by weight of the derived alcohol relative to the deriving acetate can bring the confirmable effect. When the deriving acetate constitutes less than 10% by weight in the total natural sex pheromone composition, use of a mating disruptant comprising 1.5 to 10.0% by weight, preferably from 1.5 to 6.0% by weight of the derived alcohol relative to the deriving acetate can bring the confirmable effect. More particularly, when the deriving acetate constitutes less than 50% by weight (the acetate is a minor component) in the total natural sex pheromone composition, use of a mating disruptant comprising 1 to 10% by weight of the derived alcohol relative to the deriving acetate may be preferable.

The amount of the alcohol to be added varies depending on the content of the acetate sex pheromone. Although it is presumed to be affected by a release amount of the alcohol from the mating disruptant, details of the reason have not yet been confirmed. In each case, it is not preferable to add the alcohol in an amount exceeding the upper limit because it produces a disruption effect by traps and because of an economic reason. On the other hand, it is not suitable to add the alcohol in an amount below the lower limit because it has less or no influence on the control effect although the reason of which is not known.

The alcohol to be added to the acetate may be desirably the alcohol obtained by hydrolysis of the acetate, but has no particular limitation imposed on the preparation methods thereof insofar as it has the same structure.

The invention can be applied to European Grape Berry Moth (abbreviated as EGBM in the following) (*Eupoecilia ambiguella*).

Some of conventional mating disruptants may contain a trace amount of an alcohol due to the cause in manufacturing an acetate sex pheromone. However, the alcohol is not intentionally added so that it does not limit the invention.

The following is a specific example of the mating disruptant of the invention.

(5) A mating disruptant against EGMB, the disruptant comprising (Z)-9-dodecenyl acetate whose content in the sum of acetates is from 85 to 100% by weight, (Z)-11-tetradecenyl acetate whose content therein is from 0 to 15% by weight, 0.5 to 5% by weight (Z)-9-dodecenol relative to the amount of the deriving acetate, and 1 to 10% by weight (Z)-11-tetradecenol relative to the amount of the deriving acetate.

A stabilizer such as an antioxidant or a UV absorber, or colorant can be contained by 20% by weight or less in the mating disruptant of the present invention.

The mating disruptant can be provided in any form insofar as it is a container or a carrier capable of retaining the acetate sex pheromone and an alcohol obtainable by hydrolysis of the acetate and releasing them gradually. It may be preferably in form of a tube, a capsule, an ampoule or a bag. Of these, the tube may be the most suitable because it can release the sex pheromone uniformly for a long period of time. The tube having an inner diameter of from 0.5 to 2.0 mm and thickness of from 0.2 to 1.0 mm can keep releasing the disruptant at an appropriate rate.

The material of the container may be is preferably a polyolefin polymer. Examples of it may include polyolefins such as polyethylene and polypropylene, and copolymers containing 80% by weight or greater of ethylene such as ethylene-vinyl acetate copolymer and ethylene-acrylate copolymer. A container comprising such a material can let a sex pheromone penetrate and the like through the material and release the sex pheromone and the like at an appropriate rate outside the plastic membrane. The material may also be biodegradable polyester or polyvinyl chloride.

The container in the above-mentioned form may have one or more compartments for enclosing therein a disruptant solution. When it has two or more compartments, their inner diameters or thicknesses may be different from each other. In addition, the disruptant solution may be enclosed in at least one compartment.

In a container having one or more compartments, an amount of the mating disruptant placed in each compartment may be variable depending on a release period, volatility of the sex pheromone substance, affinity with the material of compartment, and others. The amount of the mating disruptant placed in each compartment may be preferably 50 to 400mg, more preferably 150 to 300mg.

Even if the mating disruptants satisfy the above conditions, the mating disruptants which require a special place for handling them or have an adverse effect on the environment are not preferred.

EXAMPLES

The present invention will hereinafter be described by Examples. However, it should not be construed that the invention is limited to or by them.

<Preparation of mating disruptant>

A polymer container made of a polyethylene tube having a predetermined inner diameter and thickness was manufactured by extrusion. Then, an intended sex pheromone composition was prepared by controlling alcohol content, corresponding to the content of acetate in a sex pheromone composition. After the resulting solution was poured from one end of the polyethylene tube, both ends of the tube were heated by high frequency waves and presseor melting and sealing. The melted portions were cut to yield a sustained release mating disrupant for the test trial. The mating disruptants thus obtained were placed at equal intervals in a field subjected to pest insect control so as to release a necessary amount of the sex pheromone substance.

<Disruption ratio by traps>

A disruption ratio by traps can relatively easily estimate a mating disruption effect and is represented by the following equation:

$$\text{Disruption ratio by traps (\%)} = \{(\text{the number of insects captured in a plot not subjected to pheromone treatment} - \text{the number of insects captured by pheromone treatment})/(\text{the number of insects captured in a plot not subjected to pheromone treatment})\} \times 100.$$

Accordingly, the higher ratio is likely to mean a higher mating disruption effect.

<The number of larvae, percentage of damaged fruits, percentage of damaged bunches, and percentage of damaged stems>

The number of larvae, percentage of damaged fruits, or percentage of damaged bunches can be used depending on the kind of a crop, as an estimate of a mating disruption effect other than the disruption ratio by traps.
The effect on tea leaves is typically expressed by the number of larvae per unit area ($/m^2$).
The effect on fruits is expressed by the percentage of damaged fruits represented by the following equation: {(the number of damaged fruits)/(the number of fruits surveyed)} x 100. In particular, in grapes, the percentage of damaged bunches represented by {(the number of damaged bunches)/(the number of bunches surveyed)} x 100 is one of the criteria for judging the effect. The percentage of damaged stems represented by the following equation: {(the number of damaged stems)/(the number of stems surveyed)} x 100 is also used.

Example 1

When a mating disruption method against LBAM was performed using a conventional mating disruptant, the number of LBAM caught in a pheromone trap tended to be not greater than 1 per day. Because an amount of the alcohol (E11-TDOL) was 0.2 to 0.5% by weight in the total composition of the mating disruptant, such a range of alcohol was said to have a high pest control effect. However, the effect of an organophosphorus agent such as azinphos-methyl decreased probably because of resistance thereto and pest population density became high in some areas. Taking the above into consideration, comparison tests at high and low population density areas were performed by increasing amounts of alcohol. In an apple field, 500 tubes/ha of mating disrupants, each tube having a length of 200 mm and containing 200 mg of stock solution having the following composition, HBMCBT (2-(2'-hydroxy-3'-tert-buty-5'-methyphenyl)-5-chlorobenztriazol) and BHT (2,6-ditert-buty-4-methylphenol), were placed on November 16. In each test plot, two pheromone traps were placed and a disruption ratio by traps was measured. In addition, 500 apples were observed for pest damage at the time of harvest.

Table 1

| Test Plot | | low population density area | | | high population density area | | |
|---|---|---|---|---|---|---|---|
| | | insecticide | low alcohol | high alcohol | insecticide | low alcohol | high alcohol |
| composition (wt%) | E11-TDA | - | 68.1 | 67.1 | - | 68.0 | 67.1 |
| | EE9,11-TDDA | - | 5.6 | 5.6 | - | 5.6 | 5.6 |
| | Z11-TDA | - | 23.1 | 22.8 | - | 23.1 | 22.8 |
| | E11-TDOL | - | 0.2 | 1.1 | - | 0.2 | 1.1 |
| | EE9,11-TDDOL | - | <0.01 | 0.2 | - | <0.01 | 0.2 |
| wt ratio (%) | E11-TDOL/E11-TDA | - | 0.3 | 1.6 | - | 0.3 | 1.6 |
| | EE-TDDOL/EE-TDDA | - | <0.2 | 3.6 | - | <0.2 | 3.6 |
| average number captured (number/day/trap) | | 0.69 | 0.002 | 0.001 | 2.49 | 0.012 | 0.002 |
| disruption ratio by traps (%) | | - | 99.7 | 99.6 | - | 99.5 | 99.9 |
| percetage of damaged fruits (%) | | 0.47 | 0.19 | 0.05 | 2.6 | 3.1 | 0.09 |

In Table 1, acetates and alcohols are indicated by the following abbreviations:

E11-TDA: (E)-11-tetradecenyl acetate
EE9,11-TDDA: (E,E)-9,11-tetradecadienyl acetate
Z11-TDA: (Z)-11-tetradecenyl acetate
E11-TDOL: (E)-11-tetradecenol
EE9,11-TDDOL: (E,E)-9,11-tetradecadienol

Although the acetate sex pheromone is an effective component against LBAM, the corresponding alcohol is not an effective component. However, when a pest population density is high, a mating disruptant having a higher alcohol content has a higher pest control effect although the reason for that is not known. The ratio of the alcohol (E11-TDOL) to the acetate (E11-TDA) which constitutes more than 50% by weight in the total natural sex pheromone composition was preferably 1.6% rather than 0.3%. The ratio of the alcohol (E,E-9,11-TDDOL) to the acetate (E,E-9,11-TDDA) which constitutes less than 10% by weight in the total natural sex pheromone composition was preferably 3.6% rather than 0.2%.

Example 2

In Europe, particularly northern Europe, EGBM has been a main pest insect of grapes. The second generation of it does real damage to grapes so that insecticides have conventionally been used for the control of the second generation. Mating disruptants have therefore been used also against the second or later generation. However, they have not yet brought sufficient pest control effects because sex pheromone has a pest control effect reduced as the pest population density increases. Since the mating disruptants were switched from the application against the second or later generation to the application against the first generation with a low population density, stable results has been obtained. In recent years, due to global warming, districts having a high population density of the over-wintering generation have appeared. Mating disruption tests were performed using mating disruptants comprising increased amounts of alcohol. The amount of alcohol was increased from 0.2 to 0.5% by weight, which is conventionally present as an impurity, to 0.7 to 5% by weight. In a grape field, 500 tubes/ha of mating disruptants, each tube having a length of 200 mm and containing 200 mg of stock solution having the following composition, HOBP (2-hydroxy-4-octoxybenzopheone) and BHT (2,6-ditert-buty-4-methylphenol) were placed. In each test plot, a pheromone trap was installed and a disruption ratio by traps was measured. In addition, a percentage of damaged bunches by the second generation was measured on June 30.

Table 2

| Test Plot | | 1 | 2 (Comp.Ex.) | 3 | 4 (Reference Ex.) |
|---|---|---|---|---|---|
| composition (wt%) | Z9-DDA | 90.2 | 93.1 | 92.8 | 83.6 |
| | Z9-DDOL | 1.8 | 0.1 | 0.6 | 8.2 |
| weight ratio (%) | Z9-DDOL/Z9-DDA | 2.0 | 0.1 | 0.6 | 8.8 |
| disruption ratio by traps (%) | | 98.8 | 98.0 | 98.5 | 92.1 |
| percentage of damaged bunches (%) | | 0.3 | 3.4 | 1.2 | 0.6 |

In Table 2, an acetate and corresponding alcohol are indicated by the following abbreviations:

29-TDDA: (2)-9-dodecenyl acetate
Z9-DDOL: (Z)-9-dodecenol

As in Test Plot 2, when the weight ratio of the alcohol (Z9-DDOL) to the main component (Z9-DDA) which constitutes more than 50% by weight in the total natural sex pheromone composition is not greater than 0.5% (0.1% in Test Plot 2), the disruption ratio by traps is high, but the pest control effect is not achieved. On the other hand, as in Test plot 4, when the weight ratio of the alcohol (Z9-DDOL) to the main component (Z9-DDA) which constitutes more than 50% by weight in the total natural sex pheromone composition is not less than 5.0% (8.8% in Test Plot 4), the pest control effect can be achieved, but the attraction blocking ratio lowers. As in Test Plot 1 or 3, when the weight ratio of the alcohol (Z9-DDOL) to the acetate (Z9-DDA) is in the range of from 0.5 to 5.0%, both the disruption ratio by traps and the pest control effect are high. Even if the weight ratio of the alcohol to the acetate is in the range, however, when it is 0.6% and close to the lower limit as in Test Plot 3, a percentage of damaged bunches shows a slight increase so that the weight ratio of the alcohol to the acetate is preferably near the center of the range, for example, from 1.0 to 3.0%.

Example 3

Mating disruption tests against GVM, a main pest insect of grapes comparable to EGBM in Europe, was performed in a similar manner to those of EGBM. In a grape field, 500 tubes/ha of mating disruptants, each tube having a length of 200 mm and containing 210 mg of stock solution having the following composition, HBMCBT (2-(2'-hydroxy-3'-tert-butyl-5'-methylphenyl)-5-chlorobenztriazol) and BHT (2,6-ditert-buty-4-methylphenol) were placed on March 23. In each test plot, a pheromone trap was installed and a disruption ratio by traps was measured. In addition, a percentage of damaged bunches by the second generation was measured on June 28.

Table 3

| Test Plot | | 1 | 2 (Comp.Ex.) | 3 | 4 |
|---|---|---|---|---|---|
| composition (wt%) | E7Z9-DDDA | 85.6 | 86.2 | 83.5 | 80.1 |
| | E7Z9-DDDOL | 1.5 | 0.2 | 4.0 | 7.8 |
| weight ratio (%) | E7Z9-DDDOL/E7Z9-DDDA | 1.8 | 0.2 | 4.8 | 9.7 |
| disruption ratio by traps (%) | | 98.5 | 97.7 | 96.4 | 90.5 |
| percentage of damaged bunches (%) | | 0.4 | 3.7 | 0.2 | 0.5 |

In Table 3, the acetate and corresponding alcohol are indicated by the following abbreviations.

E7Z9-DDDA: (E,Z)-7,9-dodecadienyl acetate
E7Z9-DDDOL: (E,Z)-7,9-dodecadienol

As in Test Plot 2, when the weight ratio of the alcohol (E7Z9-DDDOL) to the main component (E7Z9-DDDA) which constitutes more than 50% in the total natural sex pheromone composition is not greater than 0.5% (0.2% in Test Plot 2), the disruption ratio by traps is high, but the control effect is not achieved. On the other hand, as in Test Plot 4, when the weight ratio of the alcohol (E7Z9-DDDOL) to the main component (E7Z9-DDDA) is 5.0% or greater (9.7% in Test Plot 4), the control effect can be achieved but the disruption ratio by traps lowers. As in Test Plot 1 or 3, when the weight ratio of the alcohol (E7Z9-DDDOL) to the acetate (E7Z9-DDDA) is in the range of 0.5 to 5.0%, both the disruption ratio by traps and the pest control effect are high. Even if the weight ratio of the alcohol to the acetate is in the range, however, when it is 4.8% and close to the upper limit as in Test plot 3, a disruption ratio by traps shows a slight increase. The weight ratio of the alcohol to the acetate is preferably near the center of the range, for example, 0.7 to 3.0% by weight.

Example 4

Mating disruption tests against common cutworm, a pest insect of vegetables, were performed. In a field of Welsh onion, 100 tubes per 10 ares of mating disruptants, each tube having a length of 200 mm and containing 160 mg of stock solution having the following composition, HBMCBT (2-(2'-hydroxy-3'-tert-butyl-5'-methylphenyl)-5-chlorobenztriazol) and BHT (2,6-ditert-buty-4-methylphenol) were placed on August 20. In each test plot, a pheromone trap was installed and a disruption ratio by traps was measured. In addition, a percentage of damaged stems was measured on September 26.

Table 4

| Test Plot | | 1 | 2 (Comp.Ex.) | 3 (Comp.Ex.) | 4 |
|---|---|---|---|---|---|
| comp. (wt%) | Z9E11-TDDA | 80.2 | 79.8 | 81.0 | 80.6 |
| | Z9E12-TDDA | 8.7 | 9.1 | 8.8 | 8.9 |
| | Z9E11-TDDOL | 1.6 | 0.3 | 0.2 | 4.3 |
| | Z9E12-TDDOL | 0.18 | 0.03 | 0.19 | 0.18 |
| wt ratio (%) | Z9E11-TDDOL/Z9E11-TDDA | 2.0 | 0.4 | 0.2 | 5.3 |
| | Z9E12-TDDOL/Z9E12-TDDA | 2.1 | 0.3 | 2.2 | 2.0 |
| disruption ratio by traps (%) | | 99.4 | 97.3 | 98.5 | 92.2 |
| percetage of damaged stems (%) | | 0.3 | 2.5 | 1.2 | 0.4 |

In Table 4, acetates and alcohols are indicated by the following abbreviations.

Z9E11-TDDA: (Z,E)-9,11-tetradecadienyl acetate
Z9E12-TDDA: (Z,E)-9,12-tetradecadienyl acetate
Z9E11-TDDOL: (Z,E)-9,11-tetradecadienol
Z9E12-TDDOL: (Z,E)-9,12-tetradecadienol

As in Test Plot 2, when the weight ratio of the alcohol (Z9E11-TDDOL) to the main component (Z9E11-TDDA) which constitutes more than 50% by weight in the total natural sex pheromone composition is not greater than 0.5% (0.4% in Test Plot 2), the disruption ratio by traps is high, but the control effect is not achieved. On the other hand, as in Test Plot 4, when the weight ratio of the alcohol (Z9E11-TDDOL) to the main component (Z9E11-TDDA) is 5.0% or greater, the pest control effect can be achieved, but the disruption ratio by traps lowers. As in Test plot 1, when the weight ratios of the alcohols to the acetates are in the range of from 0.5 to 5.0%, both the disruption ratio by traps and the control effect are high. On the other hand, in Test Plot 3, the disruption ratio by traps and the number of damaged stems are slightly lowered. Accordingly, all of the ratios of the alcohols to the acetates are preferably near the center of the above range.

Example 5

Partitions having a height of 60 cm were placed between fields of 20 ares to prevent an alcohol from transferring to an adjacent field. Tests for the mating disruption method were performed using mating disruptants having different alcohol contents against oriental tea tortrix. The alcohol and acetate contents of the mating disruptants applied to each test plot are shown in Table 2. Each mating disruptant in form of a narrow polyethylene tube having a length of 200 mm contained 360 mg of effective component, and BHT (2,6-ditert-buty-4-methylphenol). On March 26, 250 tubes per 10 ares were placed. At the same time, a pheromone trap was installed at the center of each plot and disruption ratios by traps of the first and the second generations were measured. The number of larvae of the first generation and the number of larvae of the second generation were counted on June 13 and on July 26, respectively, at 20 points in each plot by using a 30cm x 30cm frame.

Table 5

| Test Plot | | | 1 | 2 | 3 | 4 | Control Plot |
|---|---|---|---|---|---|---|---|
| composition (wt%) | | Z11-TDA | 48.5 | 49.0 | 43.4 | 49.1 | |
| | | Z9-TDA | 13.4 | 13.5 | 13.0 | 13.6 | |
| | | 10Me-DDA | 1.3 | 1.4 | 1.4 | 1.3 | |
| | | Z9-DDA | 15.6 | 15.8 | 16.0 | 15.8 | |
| | | 11-DDA | 5.7 | 5.9 | 5.8 | 5.8 | |
| | | Z11-TDOL | 0.71 | 0.29 | 3.20 | 0.44 | |
| | | Z9-TDOL | 0.30 | 0.29 | 0.29 | 0.28 | |
| | | 10Me-DDOL | | 0.022 | | | |
| | | Z9-DDOL | 0.23 | 0.24 | 0.22 | 0.25 | |
| | | 11-DDOL | | 0.110 | | | |
| weight ratio (%) | | Z11-TDOL/Z11-TDA | 1.5 | 0.6 | 7.4 | 0.9 | |
| | | Z9-TDOL/Z9-TDA | 2.2 | 2.1 | 2.2 | 2.1 | |
| | | 10Me-DDOL/10Me-DDA | 1.8 | 1.6 | 1.9 | 1.8 | |
| | | Z9-DDOL/Z9-DDA | 1.5 | 1.5 | 1.4 | 1.6 | |
| | | 11-DDOL/11-DDA | 2.0 | 1.9 | 1.8 | 1.8 | |
| disruption ratio by traps of the first generation (%) | | | 100 | 99.8 | 91.2 | 100 | captured no. 2148 |
| disruption ratio by traps of the second generation (%) | | | 99.9 | 99.7 | 90.8 | 100 | captured no. 3543 |
| no. of larvae of the first generation (no./m$^2$) | | | 0.0 | 0.4 | 0.0 | 0.3 | 1.4 |
| no. of larvae of the second generation (no./m$^2$) | | | 0.1 | 7.8 | 0.3 | 2.2 | 6.9 |

In Table 5, acetates and alcohols are indicated by the following abbreviations:

Z11-TDA: (Z)-11-tetradecenyl acetate
Z9-TDA: (Z)-9-tetradecenyl acetate
10Me-DDA: 10-methyl-dodecyl acetate
Z9-DDA: (Z)-9-dodecenyl acetate
11-DDA: 11-dodecenyl acetate
Z11-TDOL: (Z)-11-tetradecenol
Z9-TDOL: (Z)-9-tetradecenol
10Me-DDOL: 10-methyl-dodecanol
Z9-DDOL: (Z)-9-dodecenol
11-DDOL: 11-dodecenol

In Test Plot 2, when the weight ratio of the alcohol (Z11-TDOL) to the acetate (Z11-TDA) which constitutes no less than 30% by weight but less than 50% by weight in the total natural sex pheromone composition is not greater than 0.6%, a pest control effect of the first generation was recognized but weak, causing an increase in the density of the second generation. Accordingly, the pest control effect of the second generation is inferior to that in a conventional control plot shown for a control experiment. In Test Plot 4, when the ratio of the alcohol (Z11-TDOL) to the acetate (Z11-TDA) was no less than 0.7% but less than 1.0%, the pest control effect was recognized but insufficient. On the other hand, in Test Plot 3, when the ratio of the alcohol (Z11-TDOL) to the acetate (Z11-TDA) was more than 7%, the pest control effect was recognized. However, it was not preferable because the disruption ratio by traps was extremely reduced so that it was impossible to use the disruption ratio by traps for evaluation of a mating disruption method.

Example 6

Partitions having a height of 60 cm were placed between fields of 10 ares to prevent an alcohol from transferring to an adjacent field. Tests of the mating disruption method were performed using mating disruptants having different alcohol contents against smaller tea tortrix. The alcohol and acetate contents of the mating disruptants placed in each test plot are shown in Table 6. Each mating disruptant in form of a small polyethylene tube having a length of 200 mm contained 360 mg of effective component, and BHT (2,6-ditert-buty-4-methylphenol). On March 23 to 24, 250 tubes per 10 ares were placed. At the same time, a pheromone trap was installed at the center of each plot and disruption ratios by traps of the first and the second generations were measured. The number of larvae of the first generation and the number of larvae of the second generation were counted on June 12 and on July 25, respectively, at 40 points in each plot by using a 30cm x 30cm frame. The "Control Plot" is a field having a high density of pest insects in which the number of the pest insects captured by a trap per night is five to ten.

Table 6

| Test Plot | | 1 Comp.E | 2 | 3 | 4 | 5 | 6 Comp.E | 7 | 8 | Control Plot |
|---|---|---|---|---|---|---|---|---|---|---|
| composition (wt%) | Z11-TDA | 60.2 | 59.8 | 58.7 | 57.1 | 56.6 | 50.7 | 52.4 | 51.1 | |
| | Z9-TDA | 18.3 | 18.2 | 18.0 | 17.2 | 16.5 | 27.4 | 26.1 | 25.2 | |
| | 10Me-DDA | 1.5 | 1.5 | 1.5 | 1.6 | 1.6 | 1.3 | 1.3 | 1.3 | |
| | Z9-DDA | 3.1 | 3.2 | 3.3 | 3.2 | 3.0 | 2.7 | 2.8 | 2.7 | |
| | 11-DDA | 1.5 | 1.6 | 1.6 | 1.5 | 1.6 | 1.4 | 1.3 | 1.3 | |
| | Z11-TDOL | 1.0 | 1.0 | 1.0 | 1.0 | 1.0 | 0.2 | 0.9 | 4.1 | |
| | Z9-TDOL | 0.06 | | | | | 0.54 | | | |
| | 10Me-DDOL | | | | | | | | | |
| | Z9-DDOL | | | | | | | | | |
| | 11-DDOL | | | | | | | | | |
| weight ratio (%) | Z9-TDOL/Z9-TDA | 0.3 | 1.0 | 2.3 | 4.2 | 8.0 | 2.0 | 2.0 | 2.1 | |
| | Z11-TDOL/Z11- | 1.7 | 1.7 | 1.7 | 1.8 | 1.8 | 0.4 | 1.8 | 8.1 | |
| | 10Me-DDOL/10Me- | 2.0 | 1.6 | 1.9 | 1.9 | 2.2 | 1.8 | 2.0 | 2.1 | |
| | Z9-DDOL/Z9-DDA | 1.7 | 1.7 | 1.9 | 1.9 | 1.8 | 2.0 | 1.6 | 1.9 | |
| | 11-DDOL/11-DDA | 1.8 | 1.7 | 1.8 | 2.0 | 2.0 | 1.9 | 2.3 | 1.6 | |
| disruption ratio by of the 1st generation | | 99.9 | 100 | 100 | 99,8 | 99,4 | 99,9 | 100 | 96,2 | captur no. |
| disruption ratio by of the 2nd generation | | 99.8 | 100 | 100 | 99,5 | 98,2 | 99,8 | 100 | 94.0 | captur no. |
| no. of larvae of the generation (no./m²) | | 2.1 | 0.5 | 0.0 | 0.1 | 0.0 | 3.1 | 0.0 | 0.0 | 4.4 |
| no. of larvae of the generation (no./m²) | | 5.6 | 1.4 | 0.0 | 0.0 | 0.0 | 10.5 | 0.1 | 0.3 | 13.3 |

In Table 6, acetates and alcohols are indicated by the following abbreviations:

Z11-TDA: (Z)-11-tetradecenyl acetate
Z9-TDA: (Z)-9-tetradecenyl acetate
10Me-DDA: 10-methyl-dodecyl acetate
Z9-DDA: (Z)-9-dodecenyl acetate
11-DDA: 11-dodecenyl acetate
Z11-TDOL: (Z)-11-tetradecenol
Z9-TDOL: (2)-9-tetradecenol
10Me-DDOL: 10-methyl-dodecanol
Z9-DDOL: (Z)-9-dodecenol
11-DDOL: 11-dodecenol

Even if the mating disruptants containing not only Z11-TDA but also Z9-TDA as an effective component were used to overcome the appearance of the resistance of leaf rollers as described above, there occurred variations in the pest control effect. It was found that the amounts of alcohol contained as an impurity caused variations in pest control effect. Accordingly, in Example 6, tests were performed while changing the weight ratio of Z9-TDOL to Z9-TDA contained in the mating disruptant to 0.3%, 1.0%, 2.3%, 4.2% and 8.0%. Although the disruption ratio by traps of 98.2 or higher was observed in Test Plots 1 to 5, the pest control effect was not observed in Test Plot 1 with the weight ratio of Z9-TDOL to Z9-TDA being 0.3%, while the good pest control was observed in Test Plot 5 with the weight ratio of Z9-TDOL to Z9-TDA being 8.0%.

In Example 6, the effect caused by the addition of Z11-tetradecenol (which may hereinafter be abbreviated as "Z11-TDOL") to the main component Z11-TDA was also studied. As a result, it was found that in Test Plot 7 with the ratio of Z11-TDOL to Z11-TDA being 1.8%, the disruption ratio by traps was high and the pest control effect was sufficient. It was also found that in Test Plot 6 with the ratio of Z11-TDOL to Z11-TDA being 0.4%, the disruption ratio by traps was high but the pest control effect was inferior. Consequently, it can be understood that a certain amount or more of alcohol is preferable. On the contrary, as observed in Test Plot 8 with the weight ratio of Z11-TDOL to Z11-TDA being 8.1%, Z11-TDA with a large amount of Z11-TDOL results in the remarkably lowered disruption ratio by traps but the high pest control effect.

It has been conventionally said that in an area with high pest population density, a pest control effect is not always good even if a disruption ratio by traps is high. However, the above results have revealed that when a certain range of alcohol is present with an effective component of acetate, the pest control effect is unexpectedly high in spite of a slight reduction in a disruption ratio by traps.

In Test Plot 1 (the ratio of Z9-TDOL to Z9-TDA was 0.3%) or Test Plot 6 (the ratio of Z11-TDOL to Z11-TDA was 0.4%), where the amount of the alcohol constitutes not greater than 1% by weight in the total natural sex pheromone composition and the ratio of the alcohol to the acetate was not greater than 0.5%, the pest control effect was low. As in Test Plot 3, even if the amount of Z9-TDOL is less than 1% by weight (0.42% by weight in Test Plot 3) in the total natural sex pheromone composition, when the ratio of Z9-TDOL to Z9-TDA is slightly high (2.3% in Test Plot 3), a high pest control effect can be expected.

## Claims

1. Use of a disruptant for disrupting the mating behaviour of a pest insect, wherein the disruptant comprises

   (iii) (Z)-9-dodecenyl acetate whose content in the sum of acetates is from 85 to 100% by weight,
   (Z)-11-tetradecenyl acetate whose content therein is from 0 to 15% by weight,
   0.5 to 5% by weight (Z)-9-dodecenol relative to the amount of the (Z)-9-dodecenyl acetate, and
   1 to 10% by weight (Z)-11-tetradecenol relative to the amount of the (Z)-11-tetradecenyl acetate, and
   wherein the pest insect is European grape berry moth.

2. A mating disruption method comprising the step of releasing a sex pheromone substance of a pest insect in a field to disrupt the mating behaviour of the pest insect, wherein the sex pheromone substance is a mating disruptant comprising

   (iii) (Z)-9-dodecenyl acetate whose content in the sum of acetates is from 85 to 100% by weight,
   (Z)-11-tetradecenyl acetate whose content therein is from 0 to 15% by weight,
   0.5 to 5% by weight (Z)-9-dodecenol relative to the amount of the (Z)-9-dodecenyl acetate, and
   1 to 10% by weight (Z)-11-tetradecenol relative to the amount of the (Z)-11-tetradecenyl acetate, and
   wherein the pest insect is European grape berry moth.

## Patentansprüche

1. Verwendung eines Störungsmittels zur Störung des Paarungsverhaltens eines Schadinsekts, wobei das Störungsmittel

   (iii) (Z)-9-Dodecenylacetat, dessen Anteil an der Summe der Acetate von ab 85 bis 100 Gew.-% ist,
   (Z)-11-Tetradecenylacetat, dessen Anteil darin von ab 0 bis 15 Gew.-% ist,
   0,5 bis 5 Gew.-% (Z)-9-Dodecenol, bezogen auf die Menge des (Z)-9-Dodecenylacetats, und
   1 bis 10 Gew.-% (Z)-11-Tetradecenol, bezogen auf die Menge des (Z)-11-Tetradecenylacetats, umfasst, und

wobei das Schadinsekt ein Einbindiger Traubenwickler ist.

2. Ein Verfahren zur Störung des Paarungsverhaltens umfassend den Schritt der Freigabe einer Geschlechtspheromonsubstanz eines Schadinsekts in einem Feld, um das Paarungsverhalten des Schadinsekts zu stören, wobei die Geschlechtspheromonsubstanz ein Paarungsstörungsmittel umfassend

(iii) (Z)-9-Dodecenylacetat, dessen Anteil an der Summe der Acetate von ab 85 bis 100 Gew.-% ist,
(Z)-11-Tetradecenylacetat, dessen Anteil darin von ab 0 bis 15 Gew.-% ist,
0,5 bis 5 Gew.-% (Z)-9-Dodecenol, bezogen auf die Menge des (Z)-9-Dodecenylacetats, und
1 bis 10 Gew.-% (Z)-11-Tetradecenol, bezogen auf die Menge des (Z)-11-Tetradecenylacetats, ist, und
wobei das Schadinsekt ein Einbindiger Traubenwickler ist.

**Revendications**

1. Utilisation d'un perturbateur destiné à perturber le comportement d'accouplement d'un insecte nuisible, dans laquelle le perturbateur comprend

(iii) de l'acétate de (Z)-9-dodécényle, dont la teneur dans la somme des acétates va de 85 à 100% en poids,
de l'acétate de (Z)-11-tétradécényle, dont la teneur y est comprise dans la plage allant de 0 à 15% en poids,
de 0,5 à 5% en poids de (Z)-9-dodécénol par rapport à la quantité de l'acétate de (Z)-9-dodécényle, et
de 1 à 10% en poids de (Z)-11-tétradécénol par rapport à la quantité de l'acétate de (Z)-11-tétradécényle, et
où l'insecte nuisible est la tordeuse de la grappe européenne.

2. Méthode de perturbation de l'accouplement, comprenant l'étape consistant à libérer une substance de phéromone sexuelle d'un insecte nuisible dans une parcelle afin de perturber le comportement d'accouplement de l'insecte nuisible, dans laquelle la substance de phéromone sexuelle est un perturbateur d'accouplement comprenant

(iii) de l'acétate de (Z)-9-dodécényle, dont la teneur dans la somme des acétates va de 85 à 100% en poids,
de l'acétate de (Z)-11-tétradécényle, dont la teneur y est comprise dans la plage allant de 0 à 15% en poids,
de 0,5 à 5% en poids de (Z)-9-dodécénol par rapport à la quantité de l'acétate de (Z)-9-dodécényle, et
de 1 à 10% en poids de (Z)-11-tétradécénol par rapport à la quantité de l'acétate de (Z)-11-tétradécényle, et
où l'insecte nuisible est la tordeuse de la grappe européenne.

**REFERENCES CITED IN THE DESCRIPTION**

**Patent documents cited in the description**

- JP 62212305 A
- JP 6065007 A
- JP 63246301 A
- JP 63246301A1988 B

**Non-patent literature cited in the description**

- **ROELOFS ; BROWN.** *Ann. Rev. Ecol. Syst.,* 1982, vol. 13, 395-422